# EUROPEAN PATENT APPLICATION

(11) **EP 3 919 653 A1**
(43) Date of publication of application: **08.12.2021**
(21) Application number: 20748421.3
(22) Date of filing: 29.01.2020
(51) Int. Cl.: C23F 1/20, B29C 45/14

(54) **ALUMINUM-BASED METAL-RESIN COMPOSITE STRUCTURE, ALUMINUM-BASED METAL MEMBER, METHOD FOR MANUFACTURING ALUMINUM-BASED METAL MEMBER, AND METHOD FOR MANUFACTURING ALUMINUM-BASED METAL-RESIN COMPOSITE STRUCTURE**

(30) Priority: 29.01.2019 JP 2019013396
(71) Applicant: Mitsui Chemicals, Inc., Minato-ku Tokyo 105-7122 (JP)
(72) Inventor: SHIMAZAKI, Junya, Sodegaura-shi, Chiba 299-0265 (JP)
(74) Representative: J A Kemp LLP
(86) International application number: PCT/JP2020/003252
(87) International publication number: WO 2020/158820

(57) **Abstract**

An aluminum-based metal-resin composite structure (106) includes an aluminum-based metal member (103) in which a dendritic layer (103-2) is formed on at least a part of a surface, and a resin member (105) bonded to the aluminum-based metal member (103) via the dendritic layer (103-2) and formed of a thermoplastic resin composition, in which, when analysis is conducted with a Fourier transform infrared spectrophotometer (FTIR) on a surface (104) of a bonding portion with at least the resin member (105) in the aluminum-based metal member (103) and an absorbance of an absorption peak observed at 3400 cm⁻¹ is defined as A₁ and an absorbance at 3400 cm⁻¹ of a straight line connecting an absorbance at 3800 cm⁻¹ and an absorbance at 2500 cm⁻¹ is defined as A₀, an absorbance difference (A₁ - A₀) is in a range of 0.03 or less.

## Description

### TECHNICAL FIELD

The present invention relates to an aluminum-based metal-resin composite structure, an aluminum-based metal member, a method for manufacturing an aluminum-based metal member, and a method for manufacturing an aluminum-based metal-resin composite structure.

### BACKGROUND ART

The development of techniques for integrating aluminum-based metals and resins is progressing in a wide range of industrial fields, centering on the electrical and automotive fields. In the related art, adhesives are commonly used to bond aluminum-based metals and resins and many adhesives have been developed for this reason. However, the use of adhesives not only increases the number of production steps, but is also a factor increasing the cost of the product. In addition, when using adhesives, the adhesive strength may decrease with time and sufficient bonding strength may not be achieved under high temperatures, thus, application is difficult to applications which require heat resistance, such as automobiles. In addition, mechanical bonding methods such as screw fixing are also widely used in the related art, but more widespread use is limited for reasons of weight reduction.

In recent years, there has been increased activity regarding the research and development of techniques for integrating aluminum-based metals and resins without the use of adhesives. For example, Patent Document 1 proposes a technique to integrate aluminum and resin by carrying out an immersion treatment on an aluminum alloy in warm water to form a microporous hydroxyl group-containing dendritic layer with a thickness of 5 to 100 nm on the surface thereof, then injection molding a thermoplastic resin, mainly polybutylene phthalate or polyphenylene sulfide, on the treated surface. According to this method, it is possible to make the surface of the aluminum alloy microporous without using chemicals and it is possible for the resin to be strongly bonded to the microporous surface, which is thus a very attractive technique for industrial use.

As another technique for bonding or integrating such aluminum-based metals and resins, for example, Patent Document 2 discloses a composite body formed of a metal component, in which a surface is covered with pore openings with a number average inner diameter of 10 to 80 nm formed by an anodic oxidation method, and a resin composition component of a resin composition including 70 to 99% by weight of polyphenylene sulfide and 1 to 30% by weight of polyolefin-based resin and which is adhered to the metal component described above by injection molding.

### RELATED DOCUMENT

### PATENT DOCUMENT

[Patent Document 1] Japanese Unexamined Patent Application Publication No. 2008-162115
[Patent Document 2] Japanese Unexamined Patent Application Publication No. 2007-50630

### SUMMARY OF THE INVENTION

### TECHNICAL PROBLEM

The present inventors confirmed that, when faithfully following the invention contents described in Patent Document 1 and verifying the effects thereof, even in cases where the same aluminum alloy test pieces are resin-bonded under the same surface treatment conditions and the same forming conditions, there are cases where the aluminum alloy-resin bonding exhibits high bonding strength at the level of base metal failure, on the other hand, there are cases where the bonding strength does not develop at all due to interface failure. That is, the mechanical properties of the composite bodies manufactured by the method described in the document have an inherent problem in that the reproducibility of the effect of the invention is poor. Furthermore, it was confirmed that the bonding strength of the composite body obtained by resin injection into roughened metal left indoors decreases with the time left indoors and that this tendency is remarkably apparent at high temperatures and high humidity. In other words, in order to keep the usable time (pot life) of the roughened metal obtained by the method described in the above document constant, special environmental controls and innovations are necessary.

In addition, in a method of applying a film using electricity, as described in Patent Document 2, not only are there weaknesses such as a need for a large-scale electrolysis device, only the electrode surface contributing to the electron transfer, and it not being possible to increase the treatment amount due to diffusion control, but also a composite body of the metal component and the resin composition component formed by this method does not always have sufficient bonding strength between the metal material and the resin material.

The present invention is created in consideration of the above circumstances and provides an aluminum-based metal-resin composite structure which is able to directly bond an aluminum-based metal member and a resin member formed of a thermoplastic resin composition without using an adhesive and which has excellent bonding strength between the aluminum-based metal member and the resin member.

Furthermore, the present invention provides an aluminum-based metal member able to stably obtain an aluminum-based metal-resin composite structure having excellent bonding strength between an aluminum-based metal member and a resin member, a method for manufacturing the same, and a method for manufacturing an aluminum-based metal-resin composite structure.

### SOLUTION TO PROBLEM

The present inventors carried out intensive research to minimize variations in the bonding strength between an aluminum-based metal and a resin in aluminum-based metal-resin composite structures and to develop a stable bonding strength. As a result, it was found that the treated aluminum-based metal surface satisfying specific microstructure requirements significantly improves the stability of the bonding strength, thereby completing the present invention.

According to the present invention, an aluminum-based metal-resin composite structure, an aluminum-based metal member, a method for manufacturing an aluminum-based metal member, and a method for manufacturing an aluminum-based metal-resin composite structure are provided, as illustrated below.

[1] An aluminum-based metal-resin composite structure including an aluminum-based metal member in which a dendritic layer is formed on at least a part of a surface, and a resin member bonded to the aluminum-based metal member via the dendritic layer and formed of a thermoplastic resin composition, in which, when analysis is conducted with a Fourier transform infrared spectrophotometer (FTIR) on at least a surface of a bonding portion of the aluminum-based metal member with the resin member and an absorbance of an absorption peak observed at 3400 cm⁻¹ is defined as A₁ and an absorbance at 3400 cm⁻¹ of a straight line connecting an absorbance at 3800 cm⁻¹ and an absorbance at 2500 cm⁻¹ is defined as A₀, an absorbance difference (A₁ - A₀) is in a range of 0.03 or less.
[2] The aluminum-based metal-resin composite structure according to [1], in which an average number density of main trunks of the dendritic layer is 5 trunks/µm or more and 40 trunks/µm or less.
[3] An aluminum-based metal-resin composite structure including an aluminum-based metal member in which a dendritic layer is formed on at least a part of a surface, and a resin member bonded to the aluminum-based metal member via the dendritic layer and formed of a thermoplastic resin composition, in which an average number density of main trunks of the dendritic layer is 5 trunks/µm or more and 40 trunks/µm or less.
[4] The aluminum-based metal-resin composite structure according to any one of [1] to [3], in which an average thickness of the dendritic layer is 20 nm or more and less than 1000 nm, as measured from cross-sectional profile observation with a scanning electron microscope (SEM).
[5] The aluminum-based metal-resin composite structure according to any one of [1] to [4], in which the surface on which the dendritic layer is formed in the aluminum-based metal member satisfies the following property (1)
   (1) An average value of a ten-point average roughness (R_{zjis}) measured in accordance with JIS B0601:2001 (corresponding to international standard: ISO4287) is greater than 2 µm and 50 µm or less.
[6] The aluminum-based metal-resin composite structure according to any one of [1] to [5], in which the surface on which the dendritic layer is formed in the aluminum-based metal member satisfies the following property (2)
   (2) An average value of an average length (RSₘ) of roughness curve elements measured in accordance with JIS B0601:2001 (corresponding to international standard: ISO4287) is greater than 10 µm and less than 400 µm.
[7] The aluminum-based metal-resin composite structure according to any one of [1] to [6], in which the thermoplastic resin composition includes one or two or more thermoplastic resins selected from polyolefin-based resins, polyester-based resins, polyamide-based resins, and polyarylene-based resins.
[8] An aluminum-based metal member used for bonding with a resin member formed of a thermoplastic resin composition, in which a dendritic layer is formed on at least a surface of a bonding portion with the resin member, and, when analysis is conducted with a Fourier transform infrared spectrophotometer (FTIR) on the surface of the bonding portion of the aluminum-based metal member and an absorbance of an absorption peak observed at 3400 cm⁻¹ is defined as A₁ and an absorbance at 3400 cm⁻¹ of a straight line connecting an absorbance at 3800 cm⁻¹ and an absorbance at 2500 cm⁻¹ is defined as A₀, an absorbance difference (A₁ - A₀) is in a range of 0.03 or less.
[9] The aluminum-based metal member according to [8], in which an average number density of main trunks of the dendritic layer is 5 trunks/µm or more and 40 trunks/µm or less.
[10] An aluminum-based metal member used for bonding with a resin member formed of a thermoplastic resin composition, in which a dendritic layer is formed on at least a surface of a bonding portion with the resin member, and an average number density of main trunks of the dendritic layer is 5 trunks/µm or more and 40 trunks/µm or less.
[11] The aluminum-based metal member according to any one of [8] to [10], in which an average thickness of the dendritic layer is 20 nm or more and less than 1000 nm, as measured from cross-sectional profile observation with a scanning electron microscope (SEM).
[12] The aluminum-based metal member according to any one of [8] to [11], in which the surface on which the dendritic layer is formed in the aluminum-based metal member satisfies the following property (1)
   (1) An average value of a ten-point average roughness (R_{zjis}) measured in accordance with JIS B0601:2001 (corresponding to international standard: ISO4287) is greater than 2 µm and 50 µm or less.
[13] The aluminum-based metal member according to any one of [8] to [12], in which the surface on which the dendritic layer is formed in the aluminum-based metal member satisfies the following property (2)
   (2) An average value of an average length (RSₘ) of roughness curve elements measured in accordance with JIS B0601:2001 (corresponding to international standard: ISO4287) is greater than 10 µm and less than 400 µm.
[14] A method for manufacturing the aluminum-based metal member according to any one of [8] to [13], the method including a step of chemically roughening a surface of an aluminum-based metal base material by bringing the aluminum-based metal base material into contact with an oxidizing acidic aqueous solution including metal cations having a standard electrode potential E⁰ at 25°C of greater than -0.2 and 0.8 or less.
[15] The method for manufacturing the aluminum-based metal member according to [14], in which the oxidizing acidic aqueous solution includes secondary copper ions.
[16] The method for manufacturing the aluminum-based metal member according to [15], in which a concentration of the secondary copper ions in the oxidizing acidic aqueous solution is 1% by mass or more and 15% by mass or less.
[17] The method for manufacturing the aluminum-based metal member according to any one of [14] to [16], in which the oxidizing acid in the oxidizing acidic aqueous solution includes nitric acid.
[18] The method for manufacturing the aluminum-based metal member according to any one of [14] to [17], in which the oxidizing acidic aqueous solution does not include metal cations having the E⁰ of -0.2 or less.
[19] A method for manufacturing an aluminum-based metal-resin composite structure, including a step of inserting the aluminum-based metal member according to any one of [8] to [13] into an injection mold and then injecting a thermoplastic resin composition into the injection mold.

### ADVANTAGEOUS EFFECTS OF INVENTION

According to the present invention, it is possible to provide an aluminum-based metal-resin composite structure which is able to directly bond an aluminum-based metal member and a resin member formed of a thermoplastic resin composition without using an adhesive and in which the bonding strength between the aluminum-based metal member and the resin member is excellent.

Further, according to the present invention, it is possible to provide an aluminum-based metal member which is able to stably obtain an aluminum-based metal-resin composite structure in which the bonding strength between the aluminum-based metal member and a resin member is excellent, a method for manufacturing the same, and a method for manufacturing an aluminum-based metal-resin composite structure.

### BRIEF DESCRIPTION OF THE DRAWINGS

Fig. 1 is an external view showing an example of the structure of an aluminum-based metal-resin composite structure of an embodiment according to the present invention.
Fig. 2 is a cross-sectional view conceptually showing an example of the structure of a bonding portion of an aluminum-based metal-resin composite structure of an embodiment according to the present invention.
Fig. 3 is a diagram showing a SEM cross-sectional profile of a bonding portion of an aluminum-based metal-resin composite structure obtained in Example 1.

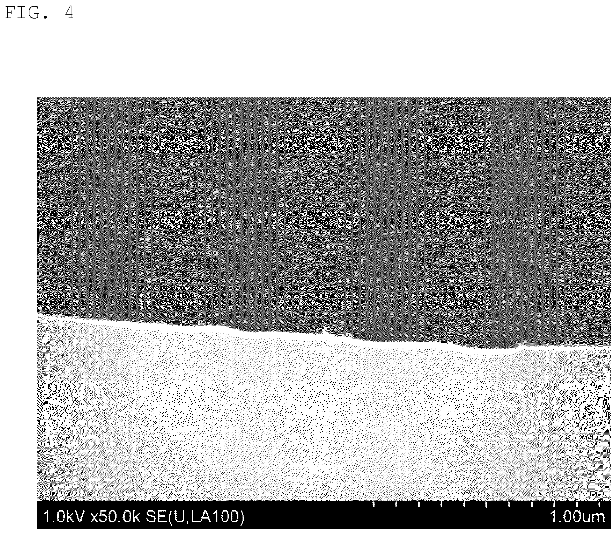

Fig. 4 is a diagram showing a SEM cross-sectional profile of a bonding portion of an aluminum-based metal-resin composite structure obtained in Comparative Example 1.

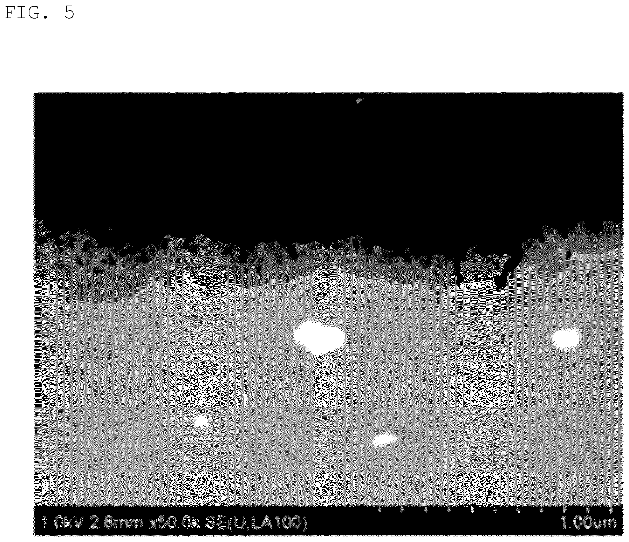

Fig. 5 is a diagram showing a SEM cross-sectional profile of a bonding portion of an aluminum-based metal-resin composite structure obtained in Comparative Example 3.
Fig. 6 is a schematic diagram to illustrate measurement locations of a total of six linear portions on the surface of the bonding portion of a metal member of the embodiment according to the present invention, formed of any three linear portions with a parallel relationship and any three linear portions orthogonal to the first three linear portions.
Fig. 7 is a diagram conceptually showing a method for determining an absorbance difference (A₁ - A₀) according to the present invention, from an FTIR chart.
Fig. 8 is a diagram showing an SEM profile of a surface of an aluminum-based metal member obtained in Example 1.

### DESCRIPTION OF EMBODIMENTS

A description will be given below of embodiments of the present invention using the drawings. In all drawings, the same components are denoted with common numerals and description thereof may not be provided, as appropriate. In addition, the figures are schematic diagrams and do not match actual dimensional proportions. The "to" between numbers in the text indicates number A or more and number B or less, unless otherwise stated. A detailed description will be given below of the aluminum-based metal-resin composite structure.

### <Aluminum-based Metal-Resin Composite Structure>

A description will be given below of an aluminum-based metal-resin composite structure 106 according to the present embodiment.

The aluminum-based metal-resin composite structure 106 according to the present embodiment is provided with an aluminum-based metal member 103, in which a dendritic layer 103-2 is formed on at least a part of the surface thereof, and a resin member 105, which is bonded to the aluminum-based metal member 103 via the dendritic layer 103-2 and formed of a thermoplastic resin composition (P) .

Here, the dendritic layer 103-2 according to the present embodiment refers to a layer in which a plurality of branched trunks stand together. In the dendritic layer 103-2 according to the present embodiment, trunks that stand together from the surface of the aluminum-based metal member 103 are referred to as "main trunks," branches that split off from the main trunks are referred to as "main branches," and branches that split off from the main branches are referred to as "side branches".

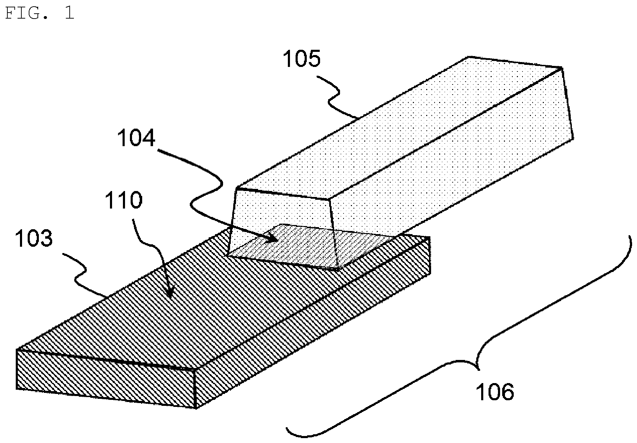

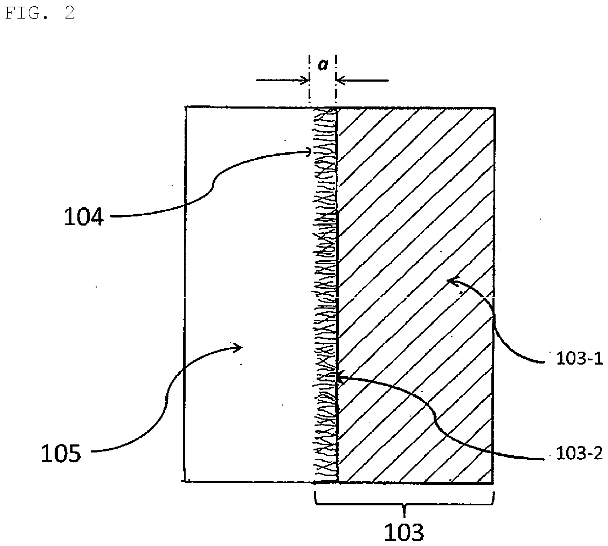

Fig. 1 is an external view showing an example of the structure of the aluminum-based metal-resin composite structure 106 of an embodiment according to the present invention. Fig. 2 is a cross-sectional view conceptually showing an example of a bonding portion of the aluminum-based metal-resin composite structure 106 of an embodiment according to the present invention.

### (Aluminum-Based Metal Member)

The aluminum-based metal member 103 forming the aluminum-based metal-resin composite structure 106 is substantially identical to the aluminum-based metal member 103 before the resin member 105 is bonded in all points, including the surface microstructure (morphology). That is, as described in the Examples below, in the aluminum-based metal member 103 according to the present embodiment, the surface microstructure of the aluminum-based metal member 103 does not change significantly before and after the injection bonding of the resin member 105. Therefore, in the present embodiment, unless otherwise specified, the aluminum-based metal member 103 encompasses not only the aluminum-based metal member before the resin member 105 is bonded, but also the aluminum-based metal member forming the aluminum-based metal-resin composite structure 106, to which the resin member 105 is bonded.

When analysis is conducted with a Fourier transform infrared spectrophotometer (FTIR) on a surface of the bonding portion with at least the resin member 105 in the aluminum-based metal member 103 forming the aluminum-based metal-resin composite structure 106 according to the present embodiment and an absorbance of an absorption peak observed at 3400 cm⁻¹ is defined as A₁ and an absorbance at 3400 cm⁻¹ of a straight line connecting an absorbance at 3800 cm⁻¹ and an absorbance at 2500 cm⁻¹ is defined as A₀, an absorbance difference (A₁ - A₀) is in a range of 0.03 or less. The lower limit of the absorbance difference (A₁ - A₀) is preferably 0.005 or more, and more preferably 0.01 or more and the upper limit of the absorbance difference (A₁ - A₀) is preferably 0.02 or less.

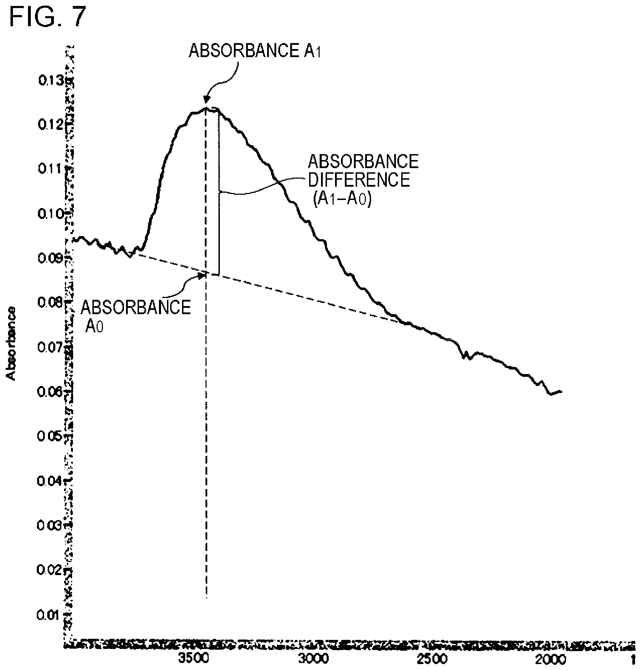

Fig. 7 shows an example of a method for determining the absorbance difference (A₁ - A₀) from an FTIR chart. In addition, in the above FTIR measurement, a high-sensitivity reflection method (RAS method) is employed and the angle of incidence of infrared light is 85°.

As will be verified in the Examples below, due to the absorbance difference satisfying such a range, in a case where the aluminum-based metal member is stored under any environmental conditions and then insert-molded with resin, it is possible to prevent a phenomenon in which the bonding strength of the composite body decreases with storage time, that is, to extend the usable time. Here, the broad absorption peak with a peak top at 3400 cm⁻¹ observed in FTIR measurement is presumed to be a peak caused by aluminum hydroxide or aluminum hydrate oxide.

The absorbance difference (A₁ - A₀) is an indicator showing the degree of hydroxyl group retention on the metal surface. The relationship between the amount of hydroxyl groups on the metal surface and the bonding strength is still unclear in many respects, but the present inventors consider the following. That is, in a case where there are more hydroxyl groups on the metal surface, it is easier to adsorb moisture in the environment and form a water molecular layer on the surface, which is particularly remarkable in a high humidity environment. As a result, it is considered that the bonding strength between the metal and resin decreases. Accordingly, by adjusting the absorbance difference (A₁ - A₀) to the range described above, it is considered that influence of the humidity in the environment is decreased and it is possible to extend the usable time and, at the same time, the obtained composite body will also develop excellent bonding strength.

The average number density of the main trunks of the dendritic layer 103-2 according to the present embodiment is 5 trunks/µm or more and 40 trunks/µm or less, preferably 7 trunks/µm or more, and more preferably 10 trunks/µm or more, and preferably 35 trunks/µm or less, and more preferably 30 trunks/µm or less.

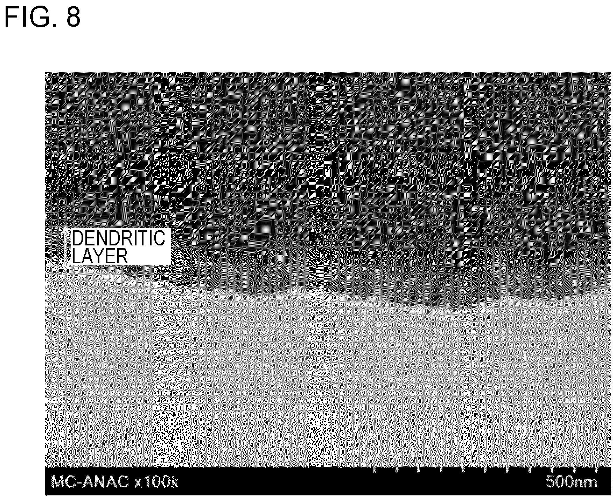

It is possible to calculate the average number density of main trunks of the dendritic layer 103-2 according to the present embodiment, for example, by selecting a certain area from an SEM photograph of the surface of the aluminum-based metal member 103, counting the "number of main trunks" which grow from the surface of the aluminum-based metal member 103, and carrying out a conversion per each unit length of the base, as shown in Fig. 8.

It is possible to measure the average number density of the main trunks in the dendritic layer 103-2 according to the present embodiment at a total of 10 locations in a single measurement sample and to adopt the average value thereof.

In the aluminum-based metal-resin composite structure 106 of the present embodiment, it is sufficient to satisfy one of the above configuration for the absorbance difference (A₁ - A₀) and the above configuration for the average number density of the main trunks, but it is preferable to satisfy both above configurations for the absorbance difference (A₁ - A₀) and the above configuration for the average number density of the main trunks.

The aluminum-based metal-resin composite structure 106 of the present embodiment has excellent bonding strength between the aluminum-based metal member 103 and the resin member 105 since the dendritic layer 103-2 is interposed on a bonding portion surface 104. In particular, in a form where the dendritic layer 103-2 is formed on a micron-ordered micro-convex structure, sufficient bonding strength is developed even if the amount of metal etching is reduced when the micro-convex shape is formed by, for example, chemical etching.

Furthermore, it was found that, in a case where the resin member 105 is injection-molded onto the aluminum-based metal member 103 in which the dendritic layer 103-2 is formed on a micron-order micro-convex structure to manufacture the ALUMINUM-based METAL-RESIN COMPOSITE STRUCTURE 106, it is possible to significantly lower the mold temperature compared to a case where the dendritic layer 103-2 is not present. This property is effectively used to reduce warpage caused by molding shrinkage of the injection-molded bodies.

In a preferable embodiment according to the present invention, the average thickness of the dendritic layer 103-2, calculated from the cross-sectional profile by a scanning electron microscope (SEM), is, for example, 20 nm or more and less than 1000 nm, preferably 30 nm or more and 900 nm or less, more preferably 50 nm or more and 800 nm or less, and even more preferably 100 nm or more and 700 nm or less. The average thickness in the present embodiment is determined by taking SEM photographs of any 10 points on the metal member, then measuring the average thickness at a length of 1 µm for any two spots for each photograph, making similar measurements for the other nine spots, and obtaining the average value of the measurement values for a total of 20 points. Due to the dendritic layer 103-2 satisfying such an average thickness, the aluminum-based metal-resin composite structure 106 maintains a high bonding strength and the deterioration of surface properties is suppressed even after long-term storage. That is, it is possible to further extend the usable time (pot life) . Regarding these excellent properties, for example, in a case where the metal-resin composite structure is prepared by insert molding of the resin member on the roughened metal member by the method described below, a certain amount of the roughened metal member is prepared in a batch and used sequentially within the usable time, which frees the process from the work of having to prepare the roughened metal member immediately before each molding.

In the aluminum-based metal member 103 according to the present embodiment, the shape of the aluminum-based metal base surface on which the dendritic layer 103-2 is formed, that is, the base surface on which the above dendritic layer 103-2 is formed, may be flat, curved, or uneven, or the flat shape of the aluminum-based metal product itself, without being particularly limited.

The surface on which the dendritic layer 103-2 is formed in the aluminum-based metal member 103 according to the present embodiment preferably satisfies either of the following properties (1) and (2) for a total of six linear portions formed of any three linear portions in a parallel relationship and any three linear portions orthogonal to the first three linear portions and more preferably satisfies the following requirements (1) and (2) at the same time. In other words, the dendritic layer 103-2 of the present embodiment is preferably formed on a micron-order rough surface which satisfies the following requirements (1) and (2) at the same time. Such a rough surface is referred to below as a double rough surface and may be distinguished from a rough surface where the dendritic layer 103-2 is formed on a commercial aluminum-based metal surface itself (single rough surface) . In a double rough surface, the micron-order rough surface which is the base may be referred to as the base rough surface and the dendritic layer coated on the base rough surface may be referred to as the fine rough surface.

(1) The average value of the ten-point average roughness (R_{zjis}) measured in accordance with JIS B0601:2001 (corresponding to international standard: ISO4287) is in the range of greater than 2 µm and 50 µm or less, preferably 5 µm to 30 µm, more preferably 8 to 25 µm, and even more preferably 10 to 20 µm. The average value of the above ten-point average roughness (R_{zjis}) is the average value of R_{zjis} of any of the six linear portions described above.
(2) The average value of the average length (RSₘ) of the roughness curve elements measured in accordance with JIS B0601:2001 (corresponding to international standard: ISO 4287) is in a range of greater than 10 µm and less than 400 µm, preferably 50 µm to 350 µm, more preferably 70 µm to 330 µm, even more preferably 70 µm to 250 µm, and yet more preferably 70 µm to 230 µm. The average value of the average length (RSₘ) of the above roughness curve elements is the average value of the RSₘ of any of the six linear portions described above.

By having a double rough surface on the surface of the aluminum-based metal member 103, the bonding strength of the aluminum-based metal-resin composite body obtained therefrom may be increased in comparison with the bonding strength of an aluminum-based metal-resin composite body obtained from a single rough surface. In addition, even if the amount of metal etching during the preparation of the base rough surface is reduced in the aluminum-based metal-resin composite body obtained from the double rough surface, since it is possible to suppress the tendency of the bonding strength to decrease, this leads to a reduction in the amount of metal loss and is more economical. Furthermore, in a case where an aluminum-based metal-resin composite body is manufactured by insert molding, the use of a double rough surface makes it possible to significantly lower the mold temperature compared to a case of using a single rough surface. As a result, it is possible to suppress the amount of warpage and deformation which is generated during the process in which the composite body taken out after the mold is opened goes from the mold temperature to the ambient temperature.

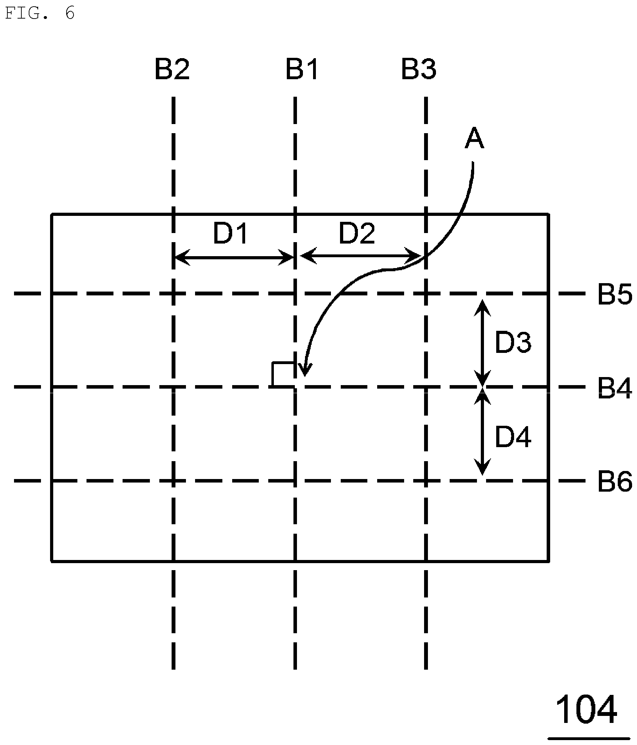

Fig. 6 is a schematic diagram for illustrating a total of six linear portions on the bonding portion surface 104 of the metal member 103, which are formed of any three linear portions in a parallel relationship and any three linear portions orthogonal to the first three linear portions.

As the above six linear portions, it is possible to select, for example, the six linear portions B1 to B6 as shown in Fig. 6. First, a center line B1 passing through the center A of the bonding portion surface 104 of the metal member 103 is selected as a reference line. Next, straight lines B2 and B3 in a parallel relationship with the center line B1 are selected. Next, a center line B4, which is orthogonal to the center line B1, is selected and straight lines B5 and B6, which are orthogonal to the center line B1 and have a parallel relationship with the center line B4, are selected. Here, vertical distances D1 to D4 between each straight line are, for example, 2 to 5 mm.

Normally, a surface roughening treatment is carried out with respect to an entire surface 110 of the metal member 103, not only to the bonding portion surface 104 in the surface 110 of the metal member 103. In a case where a surface roughening treatment is carried out with respect to the entire surface 110 of the metal member 103, six linear portions from locations other than the bonding portion surface 104 may be selected from the same metal member 103 surface as the bonding portion surface 104.

The aluminum-based metal-resin composite structure 106 according to the present embodiment is obtained by the thermoplastic resin composition (P) forming the resin member 105 penetrating the dendritic layer formed on the surface 110 of the aluminum-based metal member 103 to bond the aluminum-based metal and the resin and form an aluminum-based metal-resin interface.

Since a dendritic layer suitable for improving the bonding strength between the aluminum-based metal member 103 and the resin member 105 is formed on the surface of the aluminum-based metal member 103, it is possible to secure the bonding property between the aluminum-based metal member 103 and the resin member 105 without using an adhesive. That is, it is considered that, due to the penetration of the thermoplastic resin composition (P) into the dendritic layer on the surface 110 of the aluminum-based metal member 103, a physical resistance force (anchor effect) between the aluminum-based metal member 103 and the resin member 105 is effectively expressed and it is possible to firmly bond the aluminum-based metal member 103 and the resin member 105 formed of the thermoplastic resin composition (P), which are normally difficult to bond.

It is also possible for the aluminum-based metal-resin composite structure 106 obtained in this manner to prevent water and moisture from entering the interface between the aluminum-based metal member 103 and the resin member 105. In other words, it is also possible to improve the air tightness and liquid tightness at the attachment interface of the aluminum-based metal-resin composite structure 106.

In addition, the aluminum-based metal member 103 according to the present embodiment preferably has a specific surface area according to the BET three-point method with nitrogen adsorption of 0.01 m²/g or more and 1.0 m²/g or less, and more preferably 0.05 m²/g or more and 0.5 m²/g or less.

When the above specific surface area is within the range described above, the amount of penetration of the resin member 105 into the aluminum-based metal member 103 increases, thus, it is possible to further improve the bonding strength between the resin member 105 and the aluminum-based metal member 103.

A description will be given below of each member forming the aluminum-based metal-resin composite structure 106.

### <Aluminum-based Metal Member>

A description will be given below of the aluminum-based metal member 103 of the present embodiment.

The aluminum-based metal member 103 of the present embodiment is obtained by roughening a commercially available aluminum-based metal base material by the method described below to impart a rough surface thereto. Examples of commercially available aluminum-based metal base materials include an aluminum base material formed of aluminum alone, an aluminum alloy base material formed of an aluminum alloy, and the like.

More specifically, as aluminum-based metal base materials, it is possible to exemplify the 1000 series, which is industrial pure aluminum (aluminum alone), the 2000 series alloy, which is Al-Cu, the 3000 series alloy, which is Al-Mn, the 4000 series alloy, which is Al-Si, the 5000 series alloy, which is Al-Mg, the 6000 series alloy, which is Al-Mg-Si, and the 7000 series alloy, which is Al-Zn-Mg. Among these, it is preferable to use alloy numbers 1050, 1100, 2014, 2024, 3003, 5052, 6063, 7075, and the like.

The shape of the aluminum-based metal base material, which is the raw material of the aluminum-based metal member 103, is not particularly limited as long as bonding with the resin member 105 is possible, and, for example, a flat plate, a curved plate, a rod, a cylinder, a lump, and the like are possible. In addition, the shape may also be a structure formed of a combination of the above.

In addition, the shape of the metal base material surface forming the bonding portion surface 104 to be bonded with the resin member 105 is not limited and examples thereof include a flat surface, a curved surface, and the like.

The aluminum-based metal member 103 is preferably processed into the predetermined shape described above by carrying out plastic working such as cutting or pressing, or removal processing such as punching, shaving, polishing, or electrical discharge machining on the aluminum-based metal base material and then subjected to a roughening treatment as described below. In short, it is preferable to use a product processed into the required shape by various processing methods.

### <Resin Member>

A description will be given below of the resin member 105 according to the present embodiment.

The resin member 105 is formed of the thermoplastic resin composition (P). The thermoplastic resin composition (P) includes a thermoplastic resin (A) as a resin component and a filler (B) as necessary. Further, the thermoplastic resin composition (P) includes other blending agents as necessary. For convenience, even in a case where the resin member 105 is formed of only the thermoplastic resin (A), the resin member 105 is described as formed of the thermoplastic resin composition (P).

### (Thermoplastic Resin (A))

The thermoplastic resin (A) is not particularly limited, but includes, for example, a polyolefin-based resin, a polymethacrylic-based resin such as polymethyl methacrylate resin, a polyacrylic-based resin such as methyl polyacrylate resin, a polystyrene resin, a polyvinyl alcohol-polyvinyl chloride copolymer resin, a polyvinyl acetal resin, a polyvinyl butyral resin, a polyvinyl formyl resin, a polymethylpentene resin, a maleic anhydride-styrene copolymer resin, a polycarbonate resin, a polyphenylene ether resin, aromatic polyetherketones such as a polyether ether ketone resin and a polyether ketone resin, polyester-based resins, polyamide-based resins, polyamide-imide resins, polyimide resins, polyetherimide resins, styrene-based elastomers, polyolefin-based elastomers, polyurethane-based elastomers, polyester-based elastomers, polyamide-based elastomers, ionomers, aminopolyacrylamide resins, isobutylene maleic anhydride copolymers, ABS, ACS, AES, AS, ASA, MBS, ethylene-vinyl chloride copolymers, ethylene-vinyl acetate copolymers, ethylene-vinyl acetate-vinyl chloride graft polymer, ethylene-vinyl alcohol copolymers, chlorinated polyvinyl chloride resin, chlorinated polyethylene resin, chlorinated polypropylene resin, carboxyvinyl polymers, ketone resins, amorphous copolyester resins, norbornene resins, fluoroplastics, polytetrafluoroethylene resins, fluorinated ethylene polypropylene resins, PFA, polychlorofluoroethylene resins, ethylene tetrafluoroethylene copolymers, polyvinylidene fluoride resin, polyvinyl fluoride resin, polyarylate resin, thermoplastic polyimide resin, polyvinylidene chloride resin, polyvinyl chloride resin, polyvinyl acetate resin, polysulfone resin, polyparamethylstyrene resin, polyarylamine resin, polyvinyl ether resin, polyarylene-based resins such as polyphenylene oxide resin and polyphenylene sulfide (PPS) resin, polymethylpentene resin, oligoester acrylate, xylene resin, maleic acid resin, polyhydroxybutyrate resin, polysulfone resin, polylactic acid resin, polyglutamic acid resin, polycaprolactone resin, polyethersulfone resin, polyacrylonitrile resin, styrene-acrylonitrile copolymer resin, and the like. These thermoplastic resins may be used alone as one type or in a combination of two or more types.

Among these, as the thermoplastic resin (A), from the viewpoint that it is possible to more stably obtain a high bonding strength between the aluminum-based metal member 103 and the resin member 105, one type or two or more types of thermoplastic resins selected from a polyolefin-based resin, a polyester-based resin, a polyamide-based resin, and a polyarylene-based resin are suitably used.

### (Filler (B))

The thermoplastic resin composition (P) may further include the filler (B) from the viewpoint of adjusting the linear expansion coefficient difference between the aluminum-based metal member 103 and the resin member 105 and improving the mechanical strength of the resin member 105.

As the filler (B), for example, it is possible to select one type or two or more types from the group formed of glass fibers, carbon fibers, carbon particles, clay, talc, silica, minerals, and cellulose fibers. Among these, one type or two or more types are preferably selected from glass fibers, carbon fibers, talc, and minerals.

The shape of the filler (B) is not particularly limited and may be any shape, such as fibrous, particulate, or plate-like. The filler (B) preferably has a number fraction of 5 to 100% of a filler with a maximum length in the range of 10 nm or more and 600 µm or less. The maximum length is more preferably 30 nm or more and 550 µm or less and even more preferably 50 nm or more and 500 µm or less. The number fraction of the filler (B) in the range of this maximum length is preferably 10 to 100%, and more preferably 20 to 100%.

When the maximum length of the filler (B) is in the above range, it is possible for the filler (B) to easily move in the molten thermoplastic resin (A) during the molding of the thermoplastic resin composition (P), thus, it is possible for the filler (B) to be present near the surface of the aluminum-based metal member 103 at a certain ratio during the manufacturing of the aluminum-based metal-resin composite structure 106 described below. Therefore, as described above, the resin which interacts with the filler (B) enters the uneven shape of the surface of the aluminum-based metal member 103, making it possible to have a stronger bonding strength. In addition, when the number fraction of the filler (B) is in the above range, a number fraction of the fillers (B) sufficient to interact with the uneven shape of the surface of the aluminum-based metal member 103 is present in the thermoplastic resin composition (P).

In a case where the thermoplastic resin composition (P) includes the filler (B), the content thereof is preferably 1 part by mass or more and 100 part by mass or less with respect to 100 part by mass of the thermoplastic resin (A), more preferably from 5 parts by mass or more and 90 parts by mass or less, and particularly preferably 10 parts by mass or more and 80 parts by mass or less.

### (Other Blending Agents)

The thermoplastic resin composition (P) may include other blending agents for the purpose of imparting individual functions. Such blending agents include heat stabilizers, antioxidants, pigments, weathering agents, flame retardants, plasticizers, dispersants, lubricants, mold release agents, antistatic agents, and the like.

In a case where the thermoplastic resin composition (P) includes other blending agents, the content of the blending agents is preferably 0.0001 to 5 parts by mass with respect to 100 parts by mass of the thermoplastic resin (A), and more preferably 0.001 to 3 parts by mass.

### (Method for Preparing Thermoplastic Resin Composition (P))

The method for preparing the thermoplastic resin composition (P) is not particularly limited and preparation by generally known methods is possible. Examples thereof include the following method. First, the thermoplastic resin composition (P) is obtained by mixing or melt-mixing the above thermoplastic resin (A), the above filler (B) as necessary, and also the other blending agents as necessary, using a mixing device such as a Banbury mixer, a single-screw extruder, a twin-screw extruder, or a high-speed twin-screw extruder.

### <Method for Manufacturing Aluminum-Based Metal Member>

The aluminum-based metal member 103 according to the present embodiment is classified as double rough surface or single rough surface, as described above. It is possible to form a double rough surface by imparting a base rough surface having a micron-order micro-convex structure to the surface 110 of the metal member 103 using a known method such as a chemical etching agent, an anodic oxidation method, or a mechanical cutting method, and then imparting a fine rough surface on the base rough surface. It is possible to form a single rough surface by immediately imparting a fine rough surface on a commercially available aluminum-based metal base material without imparting a base rough surface. Below, the formation method will be described in detail using a double rough surface as an example.

### (Imparting Base Rough Surface)

It is possible to form a base rough surface having a micron-order micro-convex structure by any known metal surface roughening method. Examples thereof include chemical treatment methods; anodic oxidation methods; and mechanical cutting methods such as sandblasting, knurling, and laser processing. It is possible to use these known methods alone or in combination as appropriate.

Among these known methods, treatment with an acid-based etching agent is preferable. As a known treatment method using an acid-based etching agent, for example, it is possible to employ the treatment methods disclosed in International Publication No. 2015/8847, Japanese Unexamined Patent Application Publication No. 2001-348684, International Publication No. 2008/81933, and the like.

In the present embodiment, when a treatment with a zinc ion-containing alkaline aqueous solution is added before the

treatment with the acid-based etching agent, it is possible to improve the air tightness of the bonding surface of the metal/resin composite structure 106 and to prevent the phenomenon of loss of smoothness of the surface roughened metal surface, which is preferable. For the treatment with a zinc ion-containing alkaline aqueous solution, it is possible to adopt the treatment method disclosed in International Publication No. 2013/47365, for example.

In the present embodiment, a particularly preferable method of forming a base rough surface having a fine uneven structure on the surface 110 of the metal member 103 is to carry out the following steps (1) to (4) in this order.

### (1) Pretreatment Step

This step is for removing a film formed of an oxide film, a hydroxide, or the like present on the surface of the metal member 103 on the bonding side with the resin member 105. Normally, a mechanical polishing or chemical polishing treatment is performed. In a case where the bonding side surface is significantly contaminated with machine oil or the like, a treatment with an alkaline solution such as a sodium hydroxide solution or a potassium hydroxide solution, or degreasing may be performed.

### (2) Treatment Step with Zinc Ion-Containing Alkaline Aqueous Solution

This step is for forming a zinc-containing film on the surface of a metal member by immersing the metal member 103 after pretreatment in a zinc ion-containing alkaline aqueous solution including alkali hydroxide (MOH) and zinc ions (Zn²⁺) in a weight ratio (MOH/Zn²⁺) of 1 to 100. M in MOH is an alkali metal or alkaline earth metal.

### (3) Treatment Step with Acid-based Etching Agent

This is a step for dissolving the zinc-containing film on the surface of the metal member 103 by treating the metal member 103 after the completion of the above step (2) with an acid-based etching agent including at least one of ferric ions and secondary copper ions and acid, and forming a micron-order micro-convex shape.

### (4) Post-Treatment Step

This is a cleaning step performed after the above step (3). Usually, this step is formed of washing with water and drying operations. An ultrasonic cleaning operation may be included to remove smut.

### (Imparting Fine Rough Surface)

The metal member obtained by the above method, which has been imparted with a base rough surface having a micron-order micro-convex structure, is then brought into contact with an oxidizing acidic aqueous solution including metal cations with a standard electrode potential E⁰ at 25°C of greater than -0.2 and 0.8 or less, preferably greater than 0 and 0.5 or less, to chemically roughen the surface of the metal member to impart a fine rough surface thereto. In addition, the above oxidizing acidic aqueous solution preferably does not include the metal cations with an E⁰ of -0.2 or less described above.

It is possible to specifically exemplify metal cations for which the standard electrode potential E⁰ at 25°C is greater than -0.2 and 0.8 or less as Pb²⁺, Sn²⁺, Ag⁺, Hg²⁺, CU²⁺, and the like. Among the above, CU²⁺ is preferable from the viewpoints of scarcity of the metal and the safety and toxicity of the corresponding metal salt. As compounds which generate CU²⁺, it is possible to exemplify inorganic compounds such as copper hydroxide, cupric oxide, cupric chloride, cupric bromide, copper sulfate, and copper nitrate and it is possible to use these compounds in the present invention without limitation; however, copper oxide is preferably used from the viewpoints of safety and toxicity of the inorganic compounds and the efficiency of imparting a dendritic layer.

As an oxidizing acidic aqueous solution, it is possible to illustrate nitric acid or an acid which is a mixture of nitric acid with any of hydrochloric acid, hydrofluoric acid, or sulfuric acid. Furthermore, a percarboxylic acid solution represented by peracetic acid or performic acid may be used. In the present embodiment, in a case where nitric acid is used as the oxidizing acidic aqueous solution and cupric oxide is used as the metal cation-generating compound, the concentration of nitric acid forming the aqueous solution is, for example, 10% by mass to 40% by mass, preferably 15% by mass to 38% by mass, and more preferably 20% by mass to 35% by mass. In addition, the concentration of copper ions (secondary copper ions) forming the aqueous solution is, for example, 1% by mass to 15% by mass, preferably 2% by mass to 12% by mass, and more preferably 2% by mass to 8% by mass. When the concentration of nitric acid is less than 10% by mass, the copper ions may not be fully dissolved, which is not preferable, while in a case where the concentration exceeds 40% by mass, the viscosity of the aqueous solution itself increases, such that it may not be possible to impart a sufficient roughening effect with respect to the metal surface, which is also not preferable in terms of safety. When the copper ion concentration is less than 1% by mass, the roughening efficiency of the metal is not sufficient and the bonding strength may be reduced in the case of a composite body, while when the concentration is greater than 15% by mass, the cupric oxide is not sufficiently dissolved and there is a possibility red copper residue may be left on the metal surface, which is not preferable.

Although there are no particular restrictions on the temperature when the metal member to which a base rough surface having a micron-order micro-convex structure is imparted is brought into contact with the above oxidizing acidic aqueous solution including metal cations, a treatment temperature of, for example, room temperature to 60°C, and preferably 30°C to 50°C, is employed in order to complete the roughening at an economical speed while controlling the exothermic reaction. The treatment time at this time is in the range of, for example, 1 minute to 15 minutes, and preferably 2 minutes to 10 minutes.

The aluminum-based metal member formed in this manner and having a fine rough surface on the base rough surface is washed with water and subjected to a drying treatment as necessary to provide the aluminum-based metal member 103 for resin bonding.

### <Method for Manufacturing Aluminum-based Metal-Resin Composite Structure>

It is possible to obtain the aluminum-based metal-resin composite structure 106 of the present embodiment, for example, by inserting the aluminum-based metal member 103 obtained by the above method into a cavity portion of an injection mold and then molding the resin member 105 by an injection molding method in which the thermoplastic resin composition (P) is injected into the injection mold.

This manufacturing method specifically includes steps [1] to [3] below.
[1] Step of preparing the desired thermoplastic resin composition (P)
[2] Step of placing the aluminum-based metal member 103 obtained by the above method inside a mold for injection molding
[3] Step of injection molding the thermoplastic resin composition (P) into the above mold so as to be in contact with the aluminum-based metal member 103 using an injection molding machine and forming the resin member 105.

The step of preparing the thermoplastic resin composition (P) is as described above. A description will be given below of the injection molding method according to steps [2] and [3].

First, a mold for injection molding is prepared, the mold is opened, and the aluminum-based metal member 103 is placed in a part of the mold.

Thereafter, the mold is closed and the thermoplastic resin composition (P) obtained in step [1] is injected into the above mold, such that at least a part of the thermoplastic resin composition (P) is brought into contact with the formation region of the dendritic layer 103-2 on the surface 110 of the aluminum-based metal member 103 and solidified. Thereafter, it is possible to obtain the aluminum-based metal-resin composite structure 106 by opening and releasing the mold.

In addition, in conjunction with the injection molding according to steps [2] and [3] described above, injection foam molding and rapid heat cycle molding (RHCM, heating and cooling molding), in which the mold is heated and cooled rapidly, may be used. As a method of injection foam molding, there are methods of adding a chemical foaming agent to the resin, methods of injecting nitrogen gas or carbon dioxide gas directly into a cylinder portion of an injection molding machine, and a MuCell injection foam molding method in which nitrogen gas or carbon dioxide gas is injected into a cylinder portion of an injection molding machine in a supercritical state, but it is possible to obtain the aluminum-based metal-resin composite structure 106 in which the resin member 105 is a foamed body with any of these methods. In addition, in any method, as a method of controlling the mold, it is also possible to use counter pressure, or to use core-back molding depending on the shape of the molded product.

It is possible to implement rapid heat cycle molding by connecting a rapid heating and cooling device to the mold. It is possible for the rapid heating and cooling device to be any commonly used method. As a heating method, it is possible to use any one method of a steam method, a pressurized hot water method, a hot water method, a thermal oil method, an electric heater method, an electromagnetic induction superheating method, or a combination thereof. As a cooling method, it is possible to use any one method of a cold-water method, a cold-oil method, or a combination thereof. As the conditions of the high-speed heat cycle molding method, for example, it is desirable to heat the injection mold to a temperature of 100°C or higher and 250°C or lower and cool the injection mold after the injection of the thermoplastic resin composition (P) is completed. The preferable temperature range for heating the mold varies depending on the thermoplastic resin (A) which forms the thermoplastic resin composition (P), for a crystalline resin which is a thermoplastic resin with a melting point of lower than 200°C, 100°C or higher and 150°C or lower is preferable, and for a crystalline resin which is a thermoplastic resin with a melting point of 200°C or higher, 140°C or higher and 250°C or lower is desirable. For amorphous resins, 100°C or higher and 180°C or lower is desirable.

### <Applications of Aluminum-Based Metal-Resin Composite Structure>

The aluminum-based metal-resin composite structure 106 according to the present embodiment has high productivity and a high degree of freedom in shape control and is thus able to be developed for various applications.

Furthermore, the aluminum-based metal-resin composite structure 106 according to the present embodiment exhibits high air tightness and liquid tightness and is thus suitable for applications in accordance with these properties.

Examples thereof include structural components for vehicles, vehicle-mounted articles, housings for electronic equipment, housings for household appliances, structural components, mechanical components, components for various automobiles, components for electronic equipment, applications for household goods such as furniture and kitchenware, medical equipment, components for building materials, other structural components and exterior components, and the like.

More specific examples include the following components, which are designed such that the aluminum-based metal supports the portions which are not strong enough as resin alone. Examples relating to vehicles include instrument panels, console boxes, door knobs, door trims, shift levers, pedal types, glove boxes, bumpers, hoods, fenders, trunks, doors, roofs, pillars, seat sheets, radiators, oil pans, steering wheels, ECU boxes, electrical components, and the like. In addition, examples of building materials and furniture include glass window frames, railings, curtain rails, chests, drawers, closets, bookcases, desks, chairs, and the like. In addition, examples of precision electronic components include connectors, relays, gears, and the like. In addition, examples of transport containers include shipping containers, suitcases, trunks, and the like.

In addition, it is also possible to combine the high thermal conductivity of the aluminum-based metal member 103 and the adiabatic properties of the resin member 105 for use in component applications used in equipment optimally designed for heat management, for example, various home appliances and various cooling devices. Specific examples thereof include home appliances such as refrigerators, washing machines, vacuum cleaners, microwave ovens, air conditioners, lighting equipment, electric water heaters, televisions, clocks, ventilating fans, projectors, and speakers, electronic information equipment such as personal computers, cell phones, smart phones, digital cameras, tablet PCs, portable music players, portable game machines, chargers, and batteries, cooling units for heating elements such as CPUs and lithium-ion secondary batteries, and the like.

The above derives from the fact that, since roughening the surface of the aluminum-based metal member increases the surface area, the contact area between the aluminum-based metal member 103 and the resin member 105 is increased and it is possible to reduce the thermal resistance of the contact interface.

Examples of other applications include toys, sports equipment, shoes, sandals, bags, tableware such as forks, knives, spoons, and plates, stationery such as ballpoint pens, mechanical pencils, files, and binders, cooking utensils such as frying pans, pots, kettles, spatulas, ladles, hole ladles, whiskers, and tongs, components for lithium-ion secondary batteries, robots, and the like.

Applications of the aluminum-based metal-resin composite structure 106 according to the present embodiment were described above; however, these are examples of applications of the present invention and use is also possible for various applications other than those described above.

Although the embodiments of the present invention were described above, these are examples of the present invention and it is also possible to adopt various other configurations.

### [Examples]

A detailed description will be given below of the present embodiment with reference to Examples and Comparative Examples. The present embodiment is not limited in any way to the descriptions in these Examples.

### [Example 1]

### (Surface Roughening Step)

An aluminum alloy sheet (thickness: 2.0 mm) of alloy number A5052 specified in JIS H4000 was cut to a length of 45 mm and a width of 18 mm. The aluminum alloy sheet was subjected to a degreasing treatment and then immersed for 2 minutes in a treatment tank 1 filled with an alkaline etching agent (30°C) containing 19.0% by mass of sodium hydroxide and 3.2% by mass of zinc oxide (in the following description, this may be abbreviated as a "zinc pretreatment"), and then washed with water. Next, the obtained aluminum alloy sheet was immersed for 6 minutes at 30°C in a treatment tank 2 filled with an acid-based etching solution containing 3.9% by mass of ferric chloride, 0.2% by mass of cupric chloride, and 4.1% by mass of sulfuric acid, and subjected to oscillation (in the following description, this may be abbreviated as "Treatment 1"). Then, ultrasonic cleaning (one minute in water) was performed under running water.

Next, the aluminum alloy sheet treated in this manner was immersed for 5 minutes at 40°C in a treatment tank 3 filled with an acid-based etching solution containing 6.3% by mass (5.0% by mass as Cu²⁺) of cupric oxide and 30.0% by mass of nitric acid and subjected to oscillation (in the following description, this may be abbreviated as "Treatment 2"). Next, the aluminum alloy sheet was washed with running water and dried at 80°C for 15 minutes to obtain an aluminum alloy sheet. The standard electrode potential E⁰ of Cu²⁺ used in Treatment 2 is +0.337 (V vs. SHE).

The surface roughness of the obtained surface-treated aluminum alloy sheet was measured using a surface roughness measuring device "Surfcom 1400D (manufactured by Tokyo Seimitsu Co., Ltd.)" and, from the surface roughness measured in accordance with JIS B0601 (corresponding to ISO 4287), the ten-point average roughness (Rzⱼᵢₛ) and the average length of the roughness curve elements (RSₘ) were measured, respectively. As a result, the average value of R_{zjis} was 14 µm and the average value of RSₘ was 135 µm. The R_{zjis} average value and RSₘ average value are the averages of the measurement values at six points at different measuring locations. As shown in Fig. 6, the measurement locations were set at a total of six linear areas, formed of any three linear portions on the bonding portion surface 104 of the metal member 103 and any three linear portions orthogonal to the first linear portions.

The surface roughness measurement conditions are as follows.
Needle tip radius: 5 µm
Reference length: 0.8 mm
Evaluation length: 4 mm
Measurement speed: 0.06 mm/sec.

In addition, the specific surface area of the obtained surface-treated aluminum alloy sheets was measured by the following method. As a result, the specific surface area was 0.21 m²/g.

### [Method for Measuring Specific Surface Area]

After the test piece was vacuum heated and degassed (100°C), the adsorption isotherm was measured by the nitrogen gas adsorption method under liquid nitrogen temperature (77K) using BELSORP-max (manufactured by MicrotracBELL Corp.), and the specific surface area was determined by the BET method.

The cross-sectional structure of the above surface-treated aluminum alloy sheets was observed by SEM and, as a result, dendritic layers with an average thickness of 490 nm were observed.

Furthermore, the FT-IR spectrum of the surface of the above surface-treated aluminum alloy sheet was measured using a device combining a Fourier Transform Infrared Spectrophotometer (FTIR) manufactured by Shimadzu Corporation and a high-sensitivity reflectance measurement device (RAS-8000) at an angle of incidence of 85° to infrared light. As illustrated in Fig. 7, in a case where the absorbance of the absorption peak observed at 3400 cm⁻¹ was A₁ and the virtual absorbance at 3400 cm⁻¹ of a straight line connecting the absorbance at 3800 cm⁻¹ and the absorbance at 2500 cm⁻¹ was A₀, the absorbance difference (A₁ - A₀) value was 0.01.

In addition, Fig. 8 shows the SEM profile of the surface of the obtained surface-treated aluminum alloy sheet. According to this, the average number density of main trunks of the dendritic layer was calculated to be 28 trunks/µm.

Here, the average number density of the main trunks of the dendritic layer was measured at a total of 10 locations in one measurement sample and the average value thereof was adopted.

The storage stability of the above surface-treated aluminum alloy sheets was investigated by the following method. First, three sets of five surface-treated aluminum alloy sheets were prepared, which were double-sealed in a zippered plastic bag (product name: Unipak) so as to not overlap each other. The three sets of sealed sheets were then stored in a constant temperature and humidity tank at 40°C and 90% RH. The aluminum alloy sheets before setting (day 0) and five aluminum alloy sheets from the aluminum alloy sheet sealed sheets after storage for 14, 28, and 56 days were taken out and five specimens of aluminum-based metal-resin composite structures were manufactured by the injection molding step described below. Next, the shear strengths of the five specimens of aluminum-based metal-resin composite structures were measured by the method described below and the average value thereof was used as the bonding strength. As a result, the bonding strength of the samples after 56 days of storage was found to be within a 5% decrease rate from the bonding strength of the samples before setting.

### (Injection Molding Step)

The aluminum alloy sheet immediately after surface treatment obtained by the above method was immediately placed in a small dumbbell metal insert mold mounted on a J55-AD injection molding machine manufactured by Japan Steel Works, Ltd. Next, glass fiber reinforced polypropylene [V7100 manufactured by Prime Polymer Co., Ltd.; formed of 80% by mass of polypropylene (MFR (230°C, 2.16 kg load) : 18 g/10 min) and 20% by mass of glass fiber] as the resin composition (P) was injection molded into the mold under conditions of a cylinder temperature of 230°C, a mold temperature of 80°C, a primary injection pressure of 93 MPa, a holding pressure of 80 MPa, and an injection speed of 25 mm/sec to obtain an aluminum-based metal-resin composite structure.

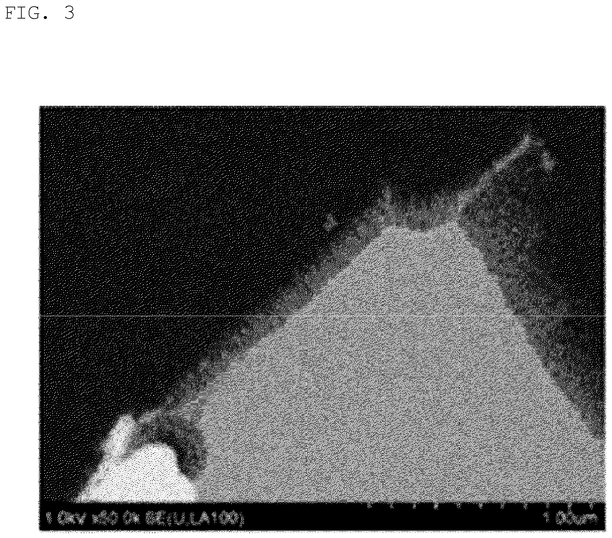

Fig. 3 shows an example of a SEM photograph of the cross-section of the bonding portion of the obtained aluminum-based metal-resin composite structure. According to this, the average thickness of the dendritic layer was calculated to be 500 nm. It was confirmed that the nano-order dendritic layer formed a cover so as to follow the micron-order uneven shape. This dendritic layer was also observed in the same manner in the SEM analysis of the surface of the aluminum alloy sheet before injection molding as described above (refer to Fig. 8) and the average thickness thereof was 490 nm. In the following Examples and Comparative Examples, unless otherwise noted, the average thickness of the dendritic layer was determined from cross-sectional SEM photographs of the aluminum-based metal member before injection molding.

A tensile shear strength measurement test of the bonding portion was carried out on the aluminum-based metal-resin composite structure obtained from the above injection molding step. Specifically, using a tensile testing machine "Model 1323 (manufactured by Aikoh Engineering Co., Ltd.)", a dedicated jig was attached to the tensile testing machine and the bonding strength measurement was performed under conditions of an inter-chuck distance of 60 mm and a tensile speed of 10 mm/min at room temperature (23°C) . The bonding strength (MPa) was obtained by dividing the breaking load (N) by the area of the bonding portion between the aluminum alloy sheet and the resin member. The bonding strength was 23.6 (MPa). The standard deviation σ was 0.2 MPa (N=5) . In the shape of the fracture surface, only base metal failure was observed. These results are summarized in Table 1.

### [Example 2]

The same operation as in Example 1 was performed except that an aluminum alloy sheet of alloy number A2024 was used instead of an aluminum alloy sheet of alloy number A5052 specified in JIS H4000. The results are summarized in Table 1.

### [Example 3]

The same operation as in Example 1 was performed except that an aluminum alloy sheet of alloy number A6063 was used instead of an aluminum alloy sheet of alloy number A5052 specified in JIS H4000. The results are summarized in Table 1.

### [Example 4]

The same operations as in Example 1 were carried out except that, as the resin composition (P) used in the injection molding step, instead of glass fiber reinforced polypropylene (V7100 manufactured by Prime Polymer Co., Ltd.), glass fiber reinforced polyamide 6 (GM1011G30 manufactured by Toray Industries, Inc.; glass fiber content 30% by mass, abbreviated in the Table as PA6) was used and the mold temperature during the injection molding step was set to 90°C. The results are summarized in Table 1.

### [Example 5]

The same operation as in Example 1 was performed except that the mold temperature during the injection molding step was lowered to 70°C. The results are summarized in Table 1.

### [Example 6]

The same operation as in Example 1 was performed except that the mold temperature during the injection molding step was increased to 120°C. The results are summarized in Table 1.

### [Comparative Example 1]

The same operation as in Example 6 was performed except that Treatment 2 was not performed. The results are summarized in Table 1.

### [Comparative Example 2]

The same operation as in Example 4 was performed except that Treatment 2 was not performed. The results are summarized in Table 1.

### [Comparative Example 3]

### (Surface Roughening Step)

An aluminum alloy sheet (thickness: 2.0 mm) of alloy number A5052 specified in JIS H4000 was cut to a length of 45 mm and a width of 18 mm. The same treatment 1 as in Example 1 was performed on this aluminum alloy sheet, then immersed in a 30% by mass nitric acid solution for 5 minutes at 65°C, and then washed thoroughly with water. After that, the result was immersed in a hot water tank at 70°C for 10 minutes and subjected to oscillation (in the following description, this may be abbreviated as "Treatment 3"), then ultrasonic cleaning (one minute in water) was performed under running water, and then drying was carried out to obtain a surface-treated aluminum alloy sheet. The amount of etching was measured and the result was 8.0% by mass.

The surface roughness was measured by the same method as described in Example 1 using a surface roughness measuring device "Surfcom 1400D (manufactured by Tokyo Seimitsu Co., Ltd.)" and, as a result, the average value of R_{zjis} was 13 µm and the average value of RSₘ was 137 µm. In addition, as a result of observing the cross-sectional SEM photograph of the above surface-treated aluminum alloy sheet, it was confirmed that the nano-order dendritic layer a cover so as to follow the micron-order uneven shape. The average thickness of the dendritic layer was estimated to be 210 nm. In the cross-sectional SEM photographs, no clear main trunks were observed in the dendritic layer and it was not possible to count the number of trunks. In addition, the absorbance difference (A₁ - A₀) value in FTIR measurement was 0.04. The storage stability at 40°C and 90% RH was examined and was 14 days.

### (Injection Molding Step)

An aluminum-based metal-resin composite structure was obtained by performing injection molding with respect to the surface-treated aluminum alloy sheet obtained by the above method in exactly the same manner as in Example 1, excluding the point that the mold temperature was 120°C. The bonding strength of the composite body was 22.0 MPa (base metal failure). The standard deviation σ (N=5) was 3.8 MPa.

### [Example 7]

The same operation as in Example 1 was performed except that Treatment 1 was not performed and a surface-treated aluminum alloy sheet formed of a single rough surface was obtained. The results are summarized in Table 1. Injection molding was performed with respect to this surface-treated aluminum alloy sheet in exactly the same manner as in Example 1 and an aluminum-based metal-resin composite structure was obtained. The results are summarized in Table 1.

**[Table 1]**

| | | | | Example 1 | Example 2 | Example 3 | Example 4 | Example 5 | Example 6 | Comparative Example 1 | Comparative Example 2 | Comparative Example 3 | Example 7 |
|---|---|---|---|---|---|---|---|---|---|---|---|---|---|
| Metal member | Aluminum-based metal base material type | | Unit | A5052 | A2024 | A6063 | A5052 | A5052 | A5052 | A5052 | A5052 | A5052 | A5052 |
| | Treatment 1 | | - | ○ | ○ | ○ | ○ | ○ | ○ | ○ | ○ | ○ | × |
| | Treatment 2 | | - | ○ | ○ | ○ | ○ | ○ | ○ | × | × | × | ○ |
| | Treatment 3 | | - | × | × | × | × | × | × | × | × | ○ | × |
| | Etching amount (ΔW) | | wt% | 8.0 | 2.4 | 9.7 | 8.6 | 8.1 | 8.2 | 7.9 | 8.1 | 8.0 | 0.3 |
| | Storage stability | | dav | 56 | 56 | 56 | 56 | 56 | 56 | 56 | 56 | 14 | 56 |
| | Surface roughness | R_{zjis} average value | µm | 14 | 11 | 12 | 13 | 14 | 13 | 12 | 12 | 13 | 1 or less |
| | | RSm average value | µm | 135 | 118 | 106 | 138 | 136 | 135 | 123 | 123 | 137 | 1 or less |
| | SEM observation | Dendritic layer thickness | nm | 490 | 500 | 510 | 480 | 495 | 492 | 0 | 0 | 210 | 250 |
| | | Main trunk number density | Trunks/ µm | 28 | 17 | 27 | 26 | 27 | 25 | 0 | 0 | Measurement not possible | 25 |
| | Specific surface area | | m²/g | 0.21 | Not measured | Not measured | 0.21 | 0.21 | 0.21 | 0.05 | 0.05 | Not measured | 0.05 |
| | FTIR measurement | (A₁ - A₀) value | - | 0.01 | 0.01 | 0.01 | 0.02 | 0.01 | 0.01 | Not measured | Not measured | 0.04 | 0.01 |
| Resin member | Resin type | | - | *PP* | *PP* | *PP* | *PA6* | *PP* | *PP* | *PP* | *PA6* | *PP* | *PP* |
| Composite body | Injection | Mold temperature | °C | 80 | | | 90 | 70 | 120 | 120 | 90 | 80 | 80 |
| | Tensile test | Bonding strength | MPa | 23.6 | 13.0 | 23.9 | 28.9 | 18.0 | 29.0 | 21.6 | 22.8 | 22.0 | 17.2 |
| | | Same as above c | MPa | 0.2 | 0.2 | 0.2 | 0.3 | 0.1 | 0.2 | 0.2 | 0.2 | 3.8 | 0.2 |
| | | Fracture form | - | Base material fracture | Base material fracture | Base material fracture | Base material fracture | Base material fracture | Base material fracture | Base material fracture | Base material fracture | Base material fracture | Base material fracture |

This application claims priority based on Japanese application JP 2019-013396 filed on January 29, 2019, the entire disclosure of which is incorporated herein.

### REFERENCE SIGNS LIST

- 103:: Aluminum-based metal member
- 103-1:: Aluminum-based metal base material
- 103-2:: Dendritic layer
- 104:: Bonding portion surface
- 105:: Resin member
- 106:: Aluminum-based metal-resin composite structure
- 110:: Surface of aluminum-based metal member

## Claims

1. An aluminum-based metal-resin composite structure comprising:
an aluminum-based metal member in which a dendritic layer is formed on at least a part of a surface; and
a resin member bonded to the aluminum-based metal member via the dendritic layer and formed of a thermoplastic resin composition,
wherein, when analysis is conducted with a Fourier transform infrared spectrophotometer (FTIR) on at least a surface of a bonding portion of the aluminum-based metal member with the resin member and an absorbance of an absorption peak observed at 3400 cm⁻¹ is defined as A₁ and an absorbance at 3400 cm⁻¹ of a straight line connecting an absorbance at 3800 cm⁻¹ and an absorbance at 2500 cm⁻¹ is defined as A₀, an absorbance difference (A₁ - A₀) is in a range of 0.03 or less.

2. The aluminum-based metal-resin composite structure according to claim 1,
wherein an average number density of main trunks of the dendritic layer is 5 trunks/µm or more and 40 trunks/µm or less.

3. An aluminum-based metal-resin composite structure comprising:
an aluminum-based metal member in which a dendritic layer is formed on at least a part of a surface; and
a resin member bonded to the aluminum-based metal member via the dendritic layer and formed of a thermoplastic resin composition,
wherein an average number density of main trunks of the dendritic layer is 5 trunks/µm or more and 40 trunks/µm or less.

4. The aluminum-based metal-resin composite structure according to any one of claims 1 to 3,
wherein an average thickness of the dendritic layer is 20 nm or more and less than 1000 nm, as measured from cross-sectional profile observation with a scanning electron microscope (SEM).

5. The aluminum-based metal-resin composite structure according to any one of claims 1 to 4,
wherein the surface on which the dendritic layer is formed in the aluminum-based metal member satisfies the following property (1)
(1) An average value of a ten-point average roughness (R_{zjis}) measured in accordance with JIS B0601:2001 (corresponding to international standard: ISO4287) is greater than 2 µm and 50 µm or less.

6. The aluminum-based metal-resin composite structure according to any one of claims 1 to 5,
wherein the surface on which the dendritic layer is formed in the aluminum-based metal member satisfies the following property (2)
(2) An average value of an average length (RSₘ) of roughness curve elements measured in accordance with JIS B0601:2001 (corresponding to international standard: ISO4287) is greater than 10 µm and less than 400 µm.

7. The aluminum-based metal-resin composite structure according to any one of claims 1 to 6,
wherein the thermoplastic resin composition includes one or two or more thermoplastic resins selected from polyolefin-based resins, polyester-based resins, polyamide-based resins, and polyarylene-based resins.

8. An aluminum-based metal member used for bonding with a resin member formed of a thermoplastic resin composition,
wherein a dendritic layer is formed on at least a surface of a bonding portion with the resin member, and,
when analysis is conducted with a Fourier transform infrared spectrophotometer (FTIR) on the surface of the bonding portion of the aluminum-based metal member and an absorbance of an absorption peak observed at 3400 cm⁻¹ is defined as A₁ and an absorbance at 3400 cm⁻¹ of a straight line connecting an absorbance at 3800 cm⁻¹ and an absorbance at 2500 cm⁻¹ is defined as A₀, an absorbance difference (A₁ - A₀) is in a range of 0.03 or less.

9. The aluminum-based metal member according to claim 8,
wherein an average number density of main trunks of the dendritic layer is 5 trunks/µm or more and 40 trunks/µm or less.

10. An aluminum-based metal member used for bonding with a resin member formed of a thermoplastic resin composition,
wherein a dendritic layer is formed on at least a surface of a bonding portion with the resin member, and
an average number density of main trunks of the dendritic layer is 5 trunks/µm or more and 40 trunks/µm or less.

11. The aluminum-based metal member according to any one of claims 8 to 10,
wherein an average thickness of the dendritic layer is 20 nm or more and less than 1000 nm, as measured from cross-sectional profile observation with a scanning electron microscope (SEM).

12. The aluminum-based metal member according to any one of claims 8 to 11,
wherein the surface on which the dendritic layer is formed in the aluminum-based metal member satisfies the following property (1)
(1) An average value of a ten-point average roughness (R_{zjis}) measured in accordance with JIS B0601:2001 (corresponding to international standard: ISO4287) is greater than 2 µm and 50 µm or less.

13. The aluminum-based metal member according to any one of claims 8 to 12,
wherein the surface on which the dendritic layer is formed in the aluminum-based metal member satisfies the following property (2)
(2) An average value of an average length (RSₘ) of roughness curve elements measured in accordance with JIS B0601:2001 (corresponding to international standard: ISO4287) is greater than 10 µm and less than 400 µm.

14. A method for manufacturing the aluminum-based metal member according to any one of claims 8 to 13, the method comprising:
a step of chemically roughening a surface of an aluminum-based metal base material by bringing the aluminum-based metal base material into contact with an oxidizing acidic aqueous solution including metal cations having a standard electrode potential E⁰ at 25°C of greater than -0.2 and 0.8 or less.

15. The method for manufacturing the aluminum-based metal member according to claim 14,
wherein the oxidizing acidic aqueous solution includes secondary copper ions.

16. The method for manufacturing the aluminum-based metal member according to claim 15,
wherein a concentration of the secondary copper ions in the oxidizing acidic aqueous solution is 1% by mass or more and 15% by mass or less.

17. The method for manufacturing the aluminum-based metal member according to any one of claims 14 to 16,
wherein the oxidizing acid in the oxidizing acidic aqueous solution includes nitric acid.

18. The method for manufacturing the aluminum-based metal member according to any one of claims 14 to 17,
wherein the oxidizing acidic aqueous solution does not include metal cations having the E⁰ of -0.2 or less.

19. A method for manufacturing an aluminum-based metal-resin composite structure, comprising:
a step of inserting the aluminum-based metal member according to any one of claims 8 to 13 into an injection mold and then injecting a thermoplastic resin composition into the injection mold.
